# EUROPÄISCHE PATENTANMELDUNG

(11) **EP 1 219 374 A1**
(43) Veröffentlichungstag der Anmeldung: **03.07.2002**
(21) Anmeldenummer: 01116377.1
(22) Anmeldetag: 06.07.2001
(51) Int. Cl.: B23H 7/26

(54) **Elektrodenhalter**

(30) Priorität: 23.08.2000 DE 20014614 U
(71) Anmelder: MegaPlast GmbH & Co. KG, 78052 Villingen-Schwenningen (DE)
(72) Erfinder: Neugart, Dieter, 78052 Villingen-Schwenningen/Tannheim (DE); Lienhard, Herbert, 78052 Villingen-Schwenningen (DE)
(74) Vertreter: Neymeyer, Franz, Dipl.-Ing. (FH)

(57) **Zusammenfassung**

Der insbesondere für eine Senkerodiermaschine vorgesehene Elektrodenhalter ist mittels eines Zugbolzens und Ausrichteinrichtungen an einem Spannfutter (1) lageorientiert befestigbar. Er weit einen Zentrieransatz zur konzentrischen und in Umfangsrichtung ausgerichteten Aufnahme eine Adapterplatte (6) auf, an welcher eine Elektrode (15) mittels axialer Befestigungsschrauben (8) befestigbar ist. Um die Elektrode (15) auf möglichst einfache weise an der Adapterplatte (6) befestigen zu können, ist an der Adapterplatte (6) ein Preßschafthalter (7) vorgesehen, der eine zentrale Preßbohrung (9) aufweist, in welche der Preßschaft (14) einer Elektrode mit einem sowohl in Umfangsrichtung als auch axial starren Preßsitz eingepreßt bzw. einpreßbar ist. Zum Einschrauben der Befestigungsschrauben (8) der Adapterplatte (6) sind axiale Gewindebohrungen (11) vorgesehen, die um die Preßbohrung (9) herum angeordnet sind.

## Beschreibung

Die Erfindung betrifft einen Elektrodenhalter, insbesondere für eine Senkerodiermaschine, der mittels eines Zugbolzens und Ausrichteinrichtungen an einem Spannfutter lageorientiert befestigbar ist und der einen Zentrieransatz zur konzentrischen und in Umfangsrichtung ausgerichteten Aufnahme eine Adapterplatte aufweist, an welcher eine Elektrode mittels axialer Befestigungsschrauben befestigbar ist.

Elektrodenhalter der gattungsgemäßen Art sind an sich bekannt. Die Adapterplatte wird bei solchen Elektrodenhaltern in der Regel dann eingesetzt, wenn relativ kleine Elektroden benötigt werden. Dabei ist die Adapterplatte mit einer zentralen Bohrung und einer sowohl in axialer als auch in radialer Richtung mit ausreichendem Spiel in dieser Bohrung gelagerten Gewindemutter versehen.

Diese Gewindemutter ist undrehbar in einer entsprechend profilierten Ausnehmung gelagert und dient zur Befestigung der Adapterplatte an der unteren Stirnseite eines Spannfutters, das seinerseits mittels eines zentralen Haltezapfens und dreidimensionalen Ausrichtvorrichtungen in einer Werkzeugmaschine, insbesondere in einer Senkerodiermaschine, befestigbar ist.

Die Adapterplatte ist außerdem mit drei konzentrisch und in gleichmäßigen Winkelabständen zur Achse der Zentralbohrung angeordneten Schraubenlöchern versehen, durch welche Befestigungsschrauben hindurchgesteckt werden können, mit denen eine mit entsprechenden Gewindebohrungen versehene Kupplungsscheibe einer Elektrode aus Cu oder C (Kupfer oder Graphit) stirnseitig angeschraubt werden kann. Auch ist die obere Stirnseite dieser Adapterplatte mit dreidimensionalen Ausrichtelementen versehen, um eine bestimmte wiederholbare Lagefixierung an der unteren Stirnseite des Spannfutters zu gewährleisten. Auch das Spannfutter ist mit einer durchgehenden zentralen Bohrung für die Aufnahme einer Kupplungsschraube versehen, welche in die in der Zentralbohrung der Adapterplatte angeordnete Gewindemutter eingeschraubt werden kann, um die Adapterplatte am Spannfutter stirnseitig zu fixieren.

Für die Befestigung einer Cu- oder C-Elektrode (Kupfer- oder Graphit-Elektrode) ist eine bereits erwähnte, besondere Kupplungsscheibe vorgesehen, welche die für die Befestigungsschrauben benötigten Gewindebohrungen aufweist. Diese liegen auf dem gleichen Kreisdurchmesser wie die Schraubenlöcher der Adapterplatte und sie weisen auch die gleichen Winkelabstände voneinander auf wie diese Schraubenlöcher.

Diese Kupplungsscheibe, die gewöhnlich eine zylindrische Form aufweist, besteht aus dem gleichen Material wie die zu verwendende bzw. zu bearbeitende Elektrode, nämlich aus Cu oder aus C (Kupfer oder Graphit).

Sie dient als Verbindungsglied zwischen der Elektrode und der Adapterplatte, an der sie angeschraubt wird. Die Befestigung der Elektrode selbst an dieser Kupplungsplatte erfolgt entweder durch Kleben oder durch Löten.

Abgesehen davon, daß diese Befestigungsarten sehr zeitaufwendig sind und damit relativ hohe Kosten verursachen, ist die damit erreichbare Festigkeit der Verbindung zwischen der Elektrode und der Adapterplatte, insbesondere bei der nachträglichen spanabhebenden Bearbeitung der Elektrode, nicht immer zufriedenstellend.

Der Erfindung liegt die Aufgabe zugrunde, für einen Elektrodenhalter der eingangs genannten Art eine Möglichkeit zu schaffen, die Elektrode auf möglichst einfache und kostensparende Weise an der Adapterplatte zu befestigen.

Gelöst wird diese Aufgabe erfindungsgemäß dadurch, daß zum Befestigen der Elektrode an der Adapterplatte ein Preßschafthalter vorgesehen ist, der eine zentrale Preßbohrung aufweist, in welche der Preßschaft einer Elektrode mit einem sowohl in Umfangsrichtung als auch axial starren Preßsitz eingepreßt bzw. einpreßbar ist, und der zum Einschrauben der Befestigungsschrauben der Adapterplatte axiale Gewindebohrungen aufweist, die um die Preßbohrung herum angeordnet sind.

Durch das Vorsehen eines Preßschafthalters der erfindungsgemäßen Art an Stelle der die drei Gewindebohrungen für die Befestigungsschrauben aufweisenden Kupplungsscheibe, entfällt das zeitaufwendige Löten oder Kleben und es wird zusätzlich der Vorteil einer wesentlich stabileren Verbindung zwischen der Elektrode und der Adapterplatte erreicht.

Zusätzliche Vorteile ergeben sich durch die Ausgestaltung des Preßschafthalters nach den Ansprüchen 2 bis 4.

Anhand der Zeichnung wird im folgenden die Erfindung näher erläutert. Es zeigt:
- Fig. 1: einen Elektrodenhalter mit daran befestigter Elektrode in Seitenansicht;
- Fig. 2: einen Preßschafthalter im Schnitt;
- Fig. 3: den Preßschafthalter der Fig. 2 in Draufsicht III;
- Fig. 4: einen Preßschafthalter im Schnitt mit einer einen zylindrischen Preßschaft aufweisenden Elektrode;
- Fig. 5: den Preßschafthalter mit einer eingepreßten kleineren Elektrode;
- Fig. 6: einen stark vergrößerten Ausschnitt VI aus Fig. 3;
- Fig. 7: im Schnitt den Preßschafthalter der Fig. 4 mit eingepreßter Elektrode und aufgesetzter Adapterplatte;
- Fig. 8: im Schnitt den an der Adapterplatte befestigten Preßschafthalter mit eingepreßter Elektrode, wobei die Adapterplatte mittels einer zentralen Kupplungsschraube am Spannfutter befestigt ist.

Der insbesondere für Senkerodiermaschinen zu verwendende Elektrodenhalter besteht aus einem Spannfutter 1, das mit einem zentralen Zugbolzen 2 versehen ist. Dieser Zubolzen 2 ist durch dreidimensionale Ausrichteinrichtungen 3 mit dem Spannfutter lösbar verbunden. An der unteren Stirnseite 4 eines im Durchmesser verjüngten zylindrischen Ansatzes 5 des Spannfutters 1 ist eine Adapterplatte 6 befestigt, an welcher ein Preßschafthalter 7 durch Befestigungsschrauben 8 lösbar befestigt ist.

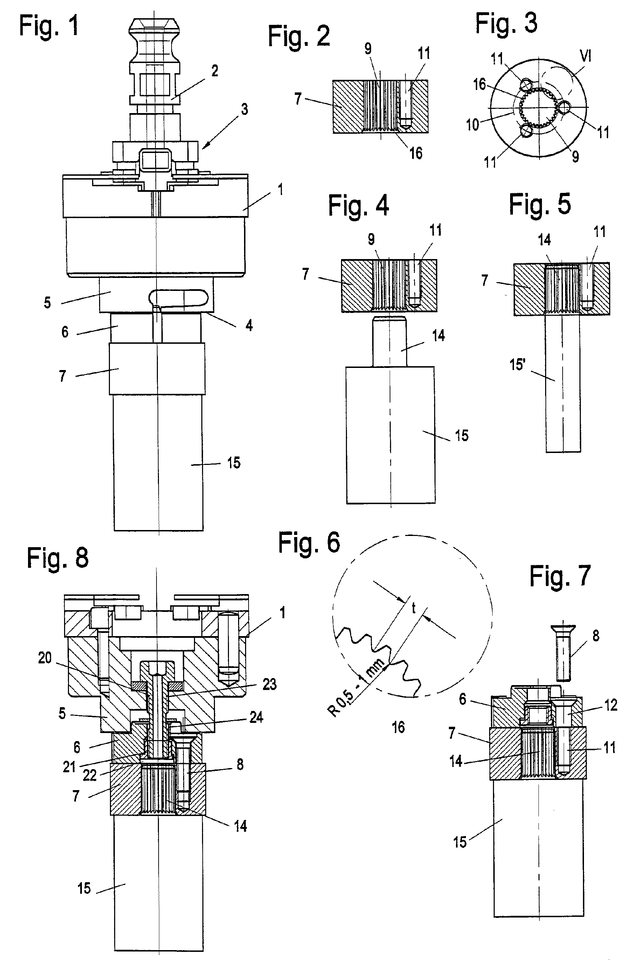

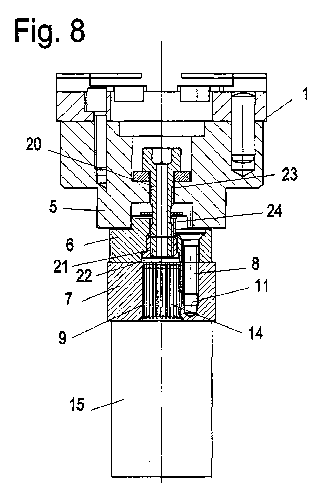

Der in den Fig. 2, 4, 5, 7 und 8 jeweils im Schnitt dargestellte Preßschafthalter 7 besteht aus einem zylindrischen Körper aus Stahl, der eine zentrale Preßbohrung 9 sowie drei um diese Bohrung herum auf einem konzentrischen Kreis 10 angeordnete Gewindebohrungen 11 aufweist. Diese Gewindebohrungen haben jeweils Winkelabstände α von 120°. Sie dienen zum Einschrauben der Befestigungsschrauben 8, die von oben in durchgehende Schraubenlöcher 12 der Adapterplatte 5 eingesetzt sind bzw. werden. Diese Schraubenlöcher 12 sind mit den gleichen Winkelabständen α auf einem konzentrischen Kreis angeordnet, der den gleichen Durchmesser hat wie der Kreis 10.

Die Preßbohrung 9 dient zur lagefixierten Aufnahme des Preßschaftes 14 einer Cu- oder C-Elektrode 15 bzw. 15'. Um eine zumindest annähernd starre Verbindung zwischen der Elektrode 15, 15' und dem Preßschafthalter 7 zu erreichen, ist die Preßbohrung 9 mit einer Kerbverzahnung 16 versehen, die sich beim Einpressen des Preßschaftes 14 in die Umfangsfläche dieses Preßschaftes eingräbt, so daß sowohl eine in Umfangsrichtung als auch in axialer Richtung starre Verbindung zwischen der Elektrode 15 bzw. 15' und dem Preßschafthalter 7 zustande kommt.

Dabei ist es zweckmäßig, wenn der Preßschafthalter 7 aus einem Material besteht, das eine größere Härte als die in der Regel aus Cu oder C (Kupfer oder Graphit) bestehenden Elektroden 15 bzw. 15' aufweist. Um in Umfangsrichtung einen Schabeffekt durch zu scharfkantige Zähne der Kerbverzahnung zu vermeiden, ist es von Vorteil, wenn die Zahnspitzen der Kerbverzahnung mit einem Rundungsradius **R** von 0,1 mm bis 0,2 mm abgerundet oder auf eine entsprechende Zahnkopfbreite abgeflacht sind.

Als besonders vorteilhaft hat sich erwiesen, wenn der Preßschaft einen Durchmesser von wenigstens 8 mm, vorzugsweise 10 mm, aufweist, und die Kerbverzahnung 16 eine Zahnteilung **t** von etwa 1 mm besitzt.

Beim Einpressen des Preßschaftes 14 einer Elektrode 15 bzw. 15' in die Preßbohrung 9 ist auf unbedingte Konzentrizität und Achsparallelität zu achten.

Nach dem Einpressen des Preßschaftes 14 in die Preßbohrung 9 wird der Preßschafthalter 7 an der unteren Stirnseite der Adapterplatte 6 mit Hilfe der drei Befestigungsschrauben 8 befestigt, die durch die drei in dekkungsgleicher Anordnung zu den Gewindebohrungen 11 in der Adapterplatte 6 vorhandenen Schraubenlöcher 12 von oben eingeführt werden.

Nach dem festen Verbinden des Preßschafthalters 7 mit der Adapterplatte 6 wird diese von unten an die Stirnseite 4 des verjüngten Absatzes 5 des Spannfutters 1 angesetzt und mittels einer zentralen Kupplungsschraube 20 am Spannfutter befestigt. Diese Kupplungsschraube 20 wird dabei in eine Gewindemutter 21 eingeschraubt, die zuvor von unten lose in eine zentrale Ausnehmung 22 der Adapterplatte 6 eingesetzt worden ist. Dabei durchragt die Kupplungsschraube 20 sowohl eine zentrale Bohrung 23 des Spannfutters 1 als auch eine zentrale Bohrung 24 der Adapterplatte 6.

Um ein sowohl in Umfangsrichtung als auch in axialer Richtung exaktes Ausrichten der Adapterplatte 6 am Spannfutter 1 zu erreichen, sind die beiden Teile an den sich gegenüberstehenden Flächen jeweils mit entsprechenden Ausrichteinrichtungen versehen.

## Patentansprüche

1. Elektrodenhalter, insbesondere für eine Senkerodiermaschine, der mittels eines Zugbolzens (2) und Ausrichteinrichtungen an einem Spannfutter (1) lageorientiert befestigbar ist und der einen Zentrieransatz zur konzentrischen und in Umfangsrichtung ausgerichteten Aufnahme eine Adapterplatte (6) aufweist, an welcher eine Elektrode (15, 15') mittels axialer Befestigungsschrauben (8) befestigbar ist,
**dadurch gekennzeichnet,**
**daß** zum Befestigen der Elektrode (15, 15') an der Adapterplatte (6) ein Preßschafthalter (7) vorgesehen ist, der eine zentrale Preßbohrung (9) aufweist, in welche der Preßschaft (14) einer Elektrode mit einem sowohl in Umfangsrichtung als auch axial starren Preßsitz eingepreßt bzw. einpreßbar ist, und der zum Einschrauben der Befestigungsschrauben (8) der Adapterplatte (6) axiale Gewindebohrungen (11) aufweist, die um die Preßbohrung (9) herum angeordnet sind.

2. Elektrodenhalter nach Anspruch 1, **dadurch gekennzeichnet, daß** der Preßschafthalter (7) aus einem Material besteht, das eine größere Härte als die vorzugsweise aus Cu oder C bestehende Elektrode (15, 15') aufweist und daß die Preßbohrung (9) mit einer Kerbverzahnung (16) versehen ist.

3. Elektrodenhalter nach Anspruch 2, **dadurch gekennzeichnet, daß** die Zahnspitzen der Kerbverzahnung (16) mit einem Rundungsradius von 0,1 bis 0,2 mm abgerundet oder auf eine entsprechende Zahnkopfbreite abgeflacht sind.

4. Elektrodenhalter nach Anspruch 2 oder 3, **dadurch gekennzeichnet, daß** der Preßschaft (14) einen Durchmesser von wenigstens 8 mm, vorzugsweise 10 mm und die Kerbverzahnung (16) eine Zahnteilung von etwa 1 mm aufweist.
